# EUROPEAN PATENT APPLICATION

(11) **EP 4 178 155 A1**
(43) Date of publication of application: **10.05.2023**
(21) Application number: 21207996.6
(22) Date of filing: 12.11.2021
(51) Int. Cl.: H04L 9/32, H04L 9/40

(54) **BLOCKCHAIN-BASED CERTIFICATION AUDIT DATA SHARING AND INTEGRITY VERIFICATION SYSTEM, DEVICE, AND METHOD THEREOF**

(30) Priority: 03.11.2021 KR 20210149847
(71) Applicant: Penta Security Systems, Inc., Seoul 07241 (KR)
(72) Inventor: LEE, Won Haeng, Seoul 04985 (KR); KWAK, Kwon Koo, Gyeonggi-do 15808 (KR); JUNG, Il Koo, Gyeonggi-do 11750 (KR); SIM, Sang Gyoo, Seoul 06939 (KR); KIM, Duk Soo, Seoul 03747 (KR); LEE, Seok Woo, Seoul 04604 (KR)
(74) Representative: Sander, Rolf

(57) **Abstract**

A blockchain-based certification audit data sharing and integrity verification system includes at least one user equipment configured to participate in a blockchain-based platform and mounted with a user authentication application; at least one certification agency server configured to participate in the blockchain-based platform and to provide authentication data composed of user data for authenticity verification, certificate or completion certificate data, and certification audit data; at least one blockchain-based platform server configured to record an authentication transaction in a block; and a blockchain-based certification audit data sharing and integrity verification device configured to: generate audit result data by auditing forgery verification of a document requested by the user authentication application of the user equipment using the authentication data of the at least one certification agency server in interlock with the blockchain-based platform server, and share the generated audit result data with the at least one certification agency server.

## Description

### BACKGROUND

### 1. Technical Field

The present disclosure relates to a blockchain-based certification audit data sharing and integrity verification system, a device, and a method thereof.

### 2. Related Art

The scale of domestic and foreign test authentication markets had been increased by an annual average of 7.14% until 2019, and it is expected to show an annual growth rate of 5.51% until 2027 in future. In order to gain a market advantage with a slow growth rate, it is demanded to increase the institutional competitiveness through high value added. Overseas authentication business leading companies preoccupy digital-related certificate markets through digital innovation.

Korean Standards Association is proceeding with a variety of theory and practical training for targets of about 25,000 people across all fields of the domestic industry. The domestic and foreign corporate education markets show continuous growth with the scale of about 449 trillion won in 2020, and e-learning and digital-related education is also increased according to digital transformation trend. Due to severe competition among domestic corporate education institutions, there is a need for a new differentiation scheme, such as new education area establishment and e-learning program creation.

Although authentication businesses are under progress while maximally securing integrity for the authentication by national and social efforts, incident accidents due to forgery and alternation of certificates occur steadily every year. The overseas authentication business leading companies are recently under way to improve internal operating efficiency and to provide digital services corresponding to transform to the digital test authentication industry. Recently, as non-face-to-face businesses are increased due to COVID-19, integrity and reliability of various kinds of proofs and certifications have got more important.

Blockchain technology is one form of distributed data storage technology, and is distributed computing technology-based ledger management technology which enables anyone to be unable to modify data that is a management target, and enables everyone to browse the result of the modification by storing the data in a chain-style link-based distributed data storage environment in which pieces of small data called "block" are generated based on a P2P method.

Further, a technology, which can facilitate security maintenance of the contract contents by making it difficult to modify or change the contract contents through the blockchain technology, and can quickly provide information with a simple consent by decentralizing the information, is called a "smart contract".

Due to the growth of Internet and mobile industry with the situation of such an authentication system, the blockchain technology capable of managing data in a P2P method rather than a centralized method has been proposed. A distributed ledger, which is the most important factor constituting the blockchain, is a core technology that makes the blockchain in a decentralized system, and indicates a form in which a centralized server does not own a database storing data, such as transaction records and the like, but all nodes participating in a blockchain network own and manage the same ledger.

There is a need to reconsider reliability of a certificate of authentication by managing a verified certificate using a blockchain as a technology capable of preventing forgery and alternation of the certificate of authentication and a certificate of completion and document tempering and verifying integrity of a document.

Further, with the recent increase in authentication systems, there exist the authentication systems which have similar authentication methods or test items, but have different management department and purposes with respect to the same product, and there is a need to reconsider removal of duplicate authentication test regulations through a technology to share and acknowledge audit data in duplicate between agencies, and there is an increasing need to solve problems for a duplicate authentication test by sharing signed audit data between agencies during duplicate authentication of the authentication test based on the blockchain technology.

### SUMMARY

In order to solve the above problems, the present disclosure is directed to provide a blockchain-based certification audit data sharing and integrity verification system, a device, and a method thereof, which can efficiently perform forgery verification of a certificate of qualification and a certificate of education completion, and can solve the duplicate authentication problem of an authentication test.

In an embodiment of the present disclosure, a blockchain-based certification audit data sharing and integrity verification system may include: at least one user equipment configured to participate in a blockchain-based platform and mounted with a user authentication application; at least one certification agency server configured to participate the blockchain-based platform and to provide authentication data composed of user data for authenticity verification, certificate or completion certificate data, and certification audit data; at least one blockchain-based platform server configured to record an authentication transaction in a block; and a blockchain-based certification audit data sharing and integrity verification device configured to: generate audit result data by auditing forgery verification of a document requested by the user authentication application of the user equipment using the authentication data of the at least one certification agency server in interlock with the blockchain-based platform server, and share the generated audit result data with the at least one certification agency server.

The at least one certification agency server may include: a user database in which user data is stored; an certificate or completion certificate database in which certificate or completion certificate data is stored; and an certification audit database in which certification audit data is stored, wherein in case that a plurality of certification agency servers perform authentication, a first certification agency server and a second certification agency server share data with each other, and provide, to a blockchain remote procedure call (RPC) module, the user data for the authenticity verification, the certificate or completion certificate data, and the certification audit data.

The system may further include a demand agency server configured to receive a submission of a verifiable presentation (VP) from the user authentication application of the user equipment of a corporate or individual customer and to verify the verifiable presentation (VP) in a decentralized identifier (DID) management blockchain.

In another embodiment of the present disclosure, a blockchain-based certification audit data sharing and integrity verification device may include: a blockchain remote procedure call (RPC) controller configured to: control the blockchain-based certification audit data sharing and integrity verification device in a method in which a computer that is far apart from a network executes a code, verify authenticity of an certificate or a completion certificate through reception of authentication data for authenticity verification, and transmit an audit result hash and an indexing to an integrity verification blockchain; and the certification audit result integrity verification blockchain configured to receive and store the indexing and the audit result hash from the blockchain remote procedure call (RPC) controller.

The device may further include a user decentralized identifier (DID) generating module configured to: manage an certificate and a completion certificate of a first certification agency server based on a decentralized identifier (DID), issue each user's unique decentralized identifier (DID), the decentralized identifier (DiD) being issued utilizing a software development kit (SDK) or an application programming interface (API), and automatically register decentralized identifier (DID) information in a blockchain in case that the user's decentralized identifier (DID) is issued.

The device may further include an certificate or completion certificate verifiable credential (VC) issuance module configured to: issue and manage an certificate and completion certificate verifiable credential (VC) in a form issued by a first certification agency server based on a decentralized identifier (DID), generate claims, the verifiable credential (VC) of a corporate member issued by the first certification agency server generating the claim by authentication items, generate decentralized identifier (DID) information of a first certification agency by signing with a private key of the first certification agency in order to verify authenticity of the certificate and the completion certificate when issuing the verifiable credential (VC), and register the certificate or completion certificate verifiable credential (VC) issued for the decentralized identifier (DID) of an issuer (corporate or individual member).

The device may further include an certificate or completion certificate verifiable credential (VC) expression function module configured to: express an certificate and completion certificate verifiable credential (VC) issued by a first certification agency so that the verifiable credential (VC) can be inquired on a screen of an issuer (corporate or individual member), express user's decentralized identifier (DID) information and a verifiable credential (VC) list recorded in the decentralized identifier (DID) after a user login, inquire and express on the screen the user's decentralized identifier (DID) information registered in a first blockchain server, express an original certificate when a specific verifiable credential (VC) is clicked, and express an original certificate image stored in an certificate or completion certificate DB.

The device may further include an certificate or completion certificate verifiable presentation (VP) generation function module configured to: perform a verifiable presentation (VP) generation function, configure claims included in a single verifiable credential (VC) by collecting only the claims demanded by a demand agency, or generate the verifiable presentation (VP) by collecting claim information from a plurality of verifiable credentials (VCs), and to enable the identification of an issuance agency of the verifiable credential (VC) including the claims constituting the verifiable presentation (VP) and an owner (corporate member) of the verifiable presentation (VP) identifying authenticity of the certificate.

The device may further include an certificate or completion certificate verifiable presentation (VP) submission module configured to: enable a user (corporate member) to submit a verifiable presentation (VP) about generated certification audit information to a demand agency, enable the demand agency to perform a process for identifying an owner (corporate member) of the verifiable presentation (VP), enable the owner (corporate member) of the verifiable presentation (VP) to sign with a private key and to submit the verifiable presentation (VP) when submitting the signed verifiable presentation (VP) to the demand agency, and enable the demand agency to identify the owner of the verifiable presentation (VP) through a public key of the corporate member.

The device may further include a submitted certificate or completion certificate verifiable presentation (VP) verification function module configured to: enable a demand agency to trust a verifiable presentation (VP) submitted by a user (corporate member), identify the verifiable presentation (VP) signed with a private key of the user (corporate member) by an identity verification through a public key of the user (corporate member), identify an agency of a verifiable credential (VC) signed with a private key of a first certification agency by an issuance agency verification through a public key of a first certification agency, and verify authenticity of the certificate through comparison of a hash value of the certificate constituting the verifiable presentation (VP) submitted through the certificate authenticity verification with a hash value of the certificate registered in a first blockchain.

The device may further include an certification audit data storage module configured to: proceed with a new certification audit procedure as a process of a first certification agency, store certification audit data submitted by a customer company, construct a database (DB) for storing the certification audit data, store a data hash simultaneously with the data storage, and use a hash value for data forgery verification when sharing the authentication data so that the authentication data is authenticated by another certification agency server.

The device may further include an certification audit result storage module configured to: proceed with a new certification audit procedure as a process of a first certification agency, store the result of certification audit submitted by a customer company, construct a database for storing the certification audit data and the result of the certification audit, store an audit result hash in a second blockchain simultaneously with the storing of the audit result, and use a hash value for certification result forgery verification when the certification result is submitted.

The device may further include a blockchain input processing module configured to: identify a configuration and disposition of a blockchain node, measure an average performance (transaction per sec (TPS)) when data registration is requested, measure time when a final verification for a new block is completed in all nodes and a block finality is satisfied, and use a most used function as a main transaction when the data registration and an authentication transaction occur.

The device may further include a data reading module configured to: measure an average performance (transaction per sec (TPS) when data inquiry is requested, and mainly inquire a most inquired function, a full-node-indexed application programming interface (API) server responding thereto.

The device may further include a decentralized identifier (DID) information registration requirement module configured to: transmit decentralized identifier (DID) information to a blockchain when a user authentication application, a first certification agency server, or a second certification agency server issues a decentralized identifier (DID), provide a dedicated network or a virtual private network, define a protocol necessary for communication between a server connected to the user authentication application or the first certification agency server and a first blockchain server, and perform communication using the defined protocol.

The device may further include an certification audit data transmission requirement module configured to: transmit authentication data necessary for an certification audit to an audit result database (DB) when a user authentication application server requests a new certification audit, provide a dedicated network or a virtual private network, define a protocol necessary for communication between the user authentication application server and the audit result database (DB), and perform communication using the defined protocol.

The device may further include a future data forgery verifiable certification audit result database (DB) requirement module configured to: provide a dedicated network or a virtual private network between an certification audit result database (DB) and a user authentication application, provide a dedicated network or a virtual private network between the certification audit result database (DB) and an certification audit data sharing server, a first certification agency being able to collect and analyze an event and a log related to the certification audit in an certification audit database (DB), transmit the certification audit data and the result collected from the certification audit result database (DB) to a data sharing server, and store all data stored in the certification audit result database (DB) with hash values thereof.

The device may further include a certification audit data sharing requirement module configured to: provide a dedicated network or a virtual private network between a certification audit result database (DB) and a certification audit data sharing server, transmit data and the audit result to a second certification agency server through a data transmission request by the certification audit data sharing server to a first certification agency server in case that a user who is unauthorized to transfer the certification audit data to another certification agency server through a certification audit data sharing site, and perform an identity verification procedure through a private key of a user (corporate member) in case that the data is transmitted through the certification audit data sharing site.

In still another embodiment of the present disclosure, a blockchain-based certification audit data sharing and integrity verification method using a system in which a user equipment mounted with a user authentication application, a blockchain-based certification audit data sharing and integrity verification device, and a blockchain-based platform interlock with one another, the method may include: registering a blockchain after issuance of a decentralized identifier (DID) by generating a pair of keys; using a blockchain as a service (BaaS) type application programming interface (API) including a decentralized identifier (DID)-related function; classifying a corporate member or a private member; generating independent decentralized identifier (DID) of each member; registering, by the user authentication application, the decentralized identifier (DID) in a decentralized identifier (DID) management blockchain; registering decentralized identifier (DID) information in certification agency member information; generating claims by authentication items in an certificate or completion certificate verifiable credential (VC) and signing with a private key; inquiring an certificate list issued through the user authentication application; requesting a new certification audit; storing certification audit data; storing a data hash and metadata; generating claims by authentication items in a corporate member verifiable credential (VC) and signing with a private key; issuing the verifiable credential (VC); expressing the verifiable credential (VC); submitting a verifiable presentation (VP) including an certificate file; verifying the verifiable presentation (VP); and returning authenticity.

The method may further include: generating the verifiable credential (VC) including results for test items in a test report or the certificate; eliminating repetition of a test by accommodating a VC of existing test items in another test or evaluation with respect to the test items included in the existing test; and generating a new VC including the existing test items and new test items together in a new test report or an certificate.

Through the present disclosure, it is possible to effectively manage the certificate and the completion certificate utilizing the blockchain, and it is possible to manage the decentralized identifier (DID)-based qualification certificate and education completion certificate by issuing the certificate issued by the existing certification agency, such as Korean Standards Association (KSA), in the form of the verifiable credential (VC), and managing the issued certificate through the customer's decentralized identifier (DID). It is also possible to perform efficient certificate (completion certificate) submission and forgery verification by issuing and submitting the verifiable presentation (VP) based on the certificate (completion certificate) issued in the form of the verifiable credential (VC) to the demand agency (agency requiring the certificate), and performing the forgery verification through comparison of the hash value recorded in the blockchain when the verifiable credential (VC) is issued with the hash value of the certificate that the customer has transferred to the demand agency.

Through the present disclosure, it is possible to solve the duplicate authentication problem through the certification audit data sharing, to store the certification audit data requested by the customer member and solve the duplicate authentication problem through the sharing between the respective certification agencies, to verify integrity by storing the hash and metadata of the certification audit data in the blockchain, and to share the certification audit data between the certification agencies through standardization of test codes that can classify the same test items, which is performed by the respective certification agencies in order to solve the duplicate authentication through the sharing of the certification audit data.

### BRIEF DESCRIPTION OF THE DRAWINGS

FIG. 1 is a block diagram of a blockchain-based certification audit data sharing and integrity verification system according to an embodiment of the present disclosure.
FIG. 2 is a conceptual diagram explaining a blockchain-based certification audit data sharing and integrity verification system according to an embodiment of the present disclosure.
FIG. 3 is a configuration diagram of a blockchain-based certification audit data sharing and integrity verification system according to an embodiment of the present disclosure.
FIG. 4 is a configuration diagram of a blockchain-based certification audit data sharing and integrity verification device according to an embodiment of the present disclosure.
FIG. 5 is a workflow A of an certificate (completion certificate) issuance and sharing in a blockchain-based certification audit data sharing and integrity verification device according to an embodiment of the present disclosure.
FIG. 6 is a workflow B of an certificate (completion certificate) issuance and sharing in a blockchain-based certification audit data sharing and integrity verification device according to an embodiment of the present disclosure.
FIG. 7 is a configuration diagram of a user authentication application of a blockchain-based certification audit data sharing and integrity verification device according to an embodiment of the present disclosure.
FIG. 8 is a configuration diagram of a user authentication application of a blockchain-based certification audit data sharing and integrity verification device according to an embodiment of the present disclosure.
FIG. 9 is a diagram illustrating an example of a screen of a web application verifiable credential (VC) issuance (certificate) of a certification agency, such as Korean Standards Association, in a blockchain-based certification audit data sharing and integrity verification system 1000 according to an embodiment of the present disclosure.
FIG. 10 is a diagram illustrating an example of a screen for storing a web application certification audit data of an certification agency, such as Korean Standards Association, in a blockchain-based certification audit data sharing and integrity verification system 1000 according to an embodiment of the present disclosure.
FIG. 11 is a configuration diagram of a blockchain-based certification audit data sharing and integrity verification device according to an embodiment of the present disclosure.
FIGS. 12A and 12B are diagrams illustrating examples of an original web application verifiable presentation (VP) verification screen and a forged web application verifiable presentation (VP) verification screen of an certification agency, such as Korean Standards Association, in a blockchain-based certification audit data sharing and integrity verification method according to an embodiment of the present disclosure.
FIG. 13 is a flowchart of a blockchain-based certification audit data sharing and integrity verification method according to an embodiment of the present disclosure.
FIG. 14 is a flowchart of a blockchain-based certification audit data sharing and integrity verification method according to an embodiment of the present disclosure.
FIG. 15 is a configuration diagram of a blockchain-based certification audit data sharing and integrity verification device according to an embodiment of the present disclosure.

### DETAILED DESCRIPTION

The present disclosure can be modified in various manners and embodied in various manners, and specific embodiments will be illustrated in the drawings and described in detail in the detailed description. However, the present disclosure is not limited to the specific embodiments, but may include all modifications, equivalents and substitutions without departing from the technical spirit and scope of the present disclosure. While the respective drawings are described, like components are represented by like reference numerals.

The terms such as first, second, A and B may be used to describe various components, but the components should not be limited by the terms. The terms are used only to classify one component from another component. For example, a first component may be referred to as a second component without departing from the scope of the present disclosure. Similarly, the second component may also be referred to as the first component. The term "and/or" includes a combination of a plurality of related described items or any one of a plurality of related described items.

When a certain component is referred to as being "coupled" or "connected" to another component, it may not only indicate that the former component is directly coupled or connected to the latter component, but also indicate that another component is present between the former component and the latter component. In contrast, when a certain component is "directly coupled" or "directly connected" to another component, it may indicate that no component is present between the former component and the latter component.

The terms used in this application are only used to describe a specific embodiment, and not intended to limit the present disclosure. The terms of a singular form may include plural forms unless otherwise specified. In this specification, the meaning of "include" or "have" specifies the presence of a property, a number, a step, a process, an element, a component, or combinations thereof, but does not exclude in advance the possibility of presence or addition of one or more other properties, numbers, steps, processes, elements, components, or combinations thereof.

All terms used herein, which include technical or scientific terms, may have the same meanings as those generally understood by those skilled in the art to which the present disclosure pertains, unless otherwise defined. The terms defined in a generally used dictionary should be interpreted to have meanings which coincide with contextual meanings in the related art. As long as the terms are not clearly defined in this specification, the terms should not be interpreted as ideal or excessively formal meanings.

Hereafter, preferred embodiments of the present disclosure will be described in detail with reference to the accompanying drawings. In explaining the present disclosure, the same reference numerals are used for the same constituent elements in the drawings, and the duplicate explanation thereof will be omitted.

A blockchain disclosed in the present disclosure is a data structure in which a block composed of a set of transactions contains a hash value of a previous block, and all blocks are connected in the form of a chain, and is a distributed ledger technology in which all nodes participating in a blockchain-based platform equally maintain the data structure, and generate and connect new blocks based on a consensus algorithm. Even if blockchain data of a specific node is arbitrarily manipulated, the blocks already have the hash value of the previous block, and thus the data manipulation can be immediately detected. Since the manipulated data is not agreed among the nodes, it is not reflected in the blockchain. As described above, since the blockchain makes it impossible to arbitrarily forge the data, it can secure integrity and transparency of the data.

The blockchain is classified into a permissionless blockchain and a permissioned blockchain. The permissionless blockchain is a blockchain in which users and nodes can participate in the blockchain-based platform without any restrictions. Each permissionless blockchain is bitcoin and ethereum. The permissioned blockchain is a blockchain in which only permissioned users and nodes can participate in the blockchain-based platform, and is suitable to be utilized in a business environment. A representative permissioned blockchain is a hyperledger fabric.

A distributed application (dApp) can be developed and operated by configuring a business logic in a smart contract that is a program being executed on the blockchain.

The smart contract has the advantage of automatically executing a request according to a logic without intervention of a third party.

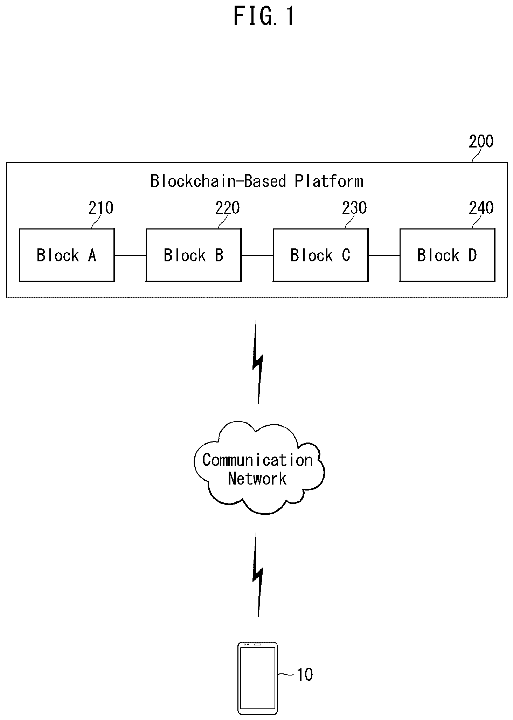

FIG. 1 is a block diagram of a blockchain-based certification audit data sharing and integrity verification system 1000 according to an embodiment of the present disclosure.

Referring to FIG. 1, a blockchain-based certification audit data sharing and integrity verification system according to an embodiment of the present disclosure may include a user equipment 10 used by a subscriber, a blockchain-based platform (200) server participating as independent blocks of block A 210, block B 220, block C 230, and block D 240, executing a chain code for an authentication transaction related to a smart contract, and recording the authentication transaction in the block, and a user authentication blockchain-based certification audit data sharing and integrity verification device 400. The user equipment 10, the blockchain-based platform (200) server, and the user authentication blockchain-based certification audit data sharing and integrity verification device 400 are connected to the blockchain-based platform 200 through a network.

The user equipment 10 is a terminal owned by a smart contract customer for participating in the blockchain-based platform 200 of the present disclosure as one node, submitting an authentication transaction, and managing the authentication transaction in the form of a distributed ledger, and participates in the blockchain-based platform 200 in order to pass through a user's identity authentication process through an installed user authentication application 100 and to record the authentication transaction related to the smart contract or other contents to be recorded in the block.

If an authentication transaction generation is requested according to a subscriber's manipulation, the user authentication application 100 installed in and executed by the user equipment 10 may invoke a query function of a chain code 310 by being connected to the block of the blockchain-based platform 200 and participating in the blockchain-based platform, and may record data related to the permissioned smart contract in a distributed ledger 320.

As the user equipment 10, all kinds of handheld-based wireless communication devices, such as personal communication system (PCS), global system for mobile communications (GSM), personal digital cellular (PDC), personal handyphone system (PHS), personal digital assistant (PDA), international mobile telecommunication (IMT)-2000, W-code division multiple access (W-CDMA), wireless broadband Internet (Wibro) terminal, smartphone, smartpad, and tablet PC, stationary PC, and a notebook computer, may be used, and the user authentication application 100 may be implemented in the form of a computer program, and may be recorded in a readable and writable recording medium to be mounted in the terminal.

The blockchain-based platform 200 is composed of one or more chain codes and few blocks in which the distributed ledger is stored, and the chain code 310 is executed by a CLI command, and interlocks with the blockchain-based platform (200) server. The blockchain-based platform 200 may be a fabric network that is led and constructed by certification agencies 500 and 500', and may generate the blocks 210, 220, 230, and 240 by registering a plurality of subscribers requiring participation by the administrator privileges that can change the network configuration, and obtaining access rights through transmission of a join request by the user authentication application 100.

The block A 210, block B 220, block C 230, and block D 240 form a platform connected by each private blockchain. As needed, the block A 210, block B 220, block C 230, or block D 240 prepares a smart contract, and in an embodiment of the present disclosure, the user authentication application 100 of the user equipment 10 interlocks with the block A 210, and makes a request for authentication on the blockchain.

In this case, each of the respective blocks 210, 220, 230, and 240 participating in the corresponding blockchain-based platform 200 may store the ledger, install the chain code 310 in the blocks 210, 220, 230, and 240, invokes a query function of the chain code 310 after noticing an interface to other blocks.

Further, some or all of the blocks 210, 220, 230, and 240 may be configured as an attendant performing the permission according to the execution of the chain code 310, and may generate a digital certificate for this during the permission.

In particular, the block D 240 among the blocks participating in the blockchain-based platform 200 may receive and record the transferred permissioned authentication transaction in the latest block, and may distribute the transaction to other blocks 210, 220, and 230.

The blockchain-based certification audit data sharing and integrity verification system 1000 according to an embodiment of the present disclosure may be a non-fungible token (NFT), and give a separate unique recognition value to the digital certificate by utilizing the blockchain technology as a token of digital assets having scarcity to make exchange thereof impossible.

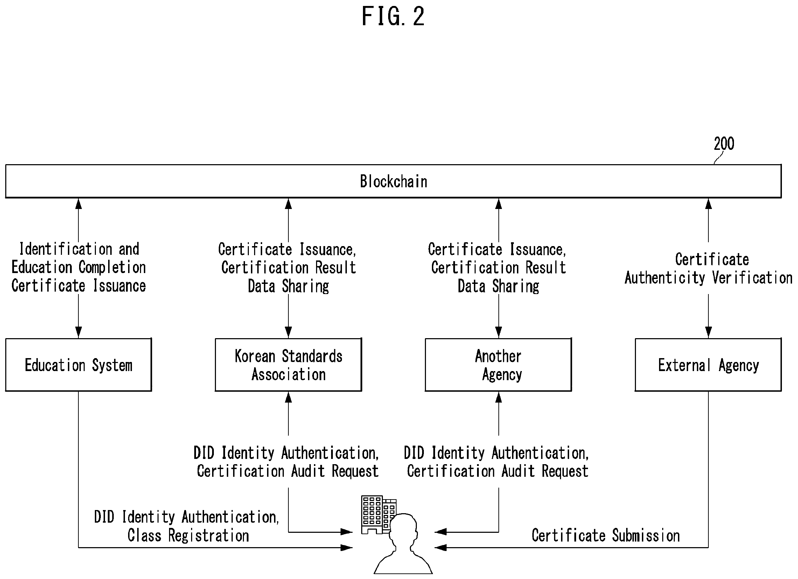

FIG. 2 is a conceptual diagram explaining a blockchain-based certification audit data sharing and integrity verification system 1000 according to an embodiment of the present disclosure.

Referring to FIG. 2, the blockchain-based certification audit data sharing and integrity verification system 1000 according to an embodiment of the present disclosure may be composed of block A 210 interlocking with an education system of a user equipment 10, block B 220 interlocking with a server of an certification agency such as Korean Standards Association (KSA), block C 230 interlocking with another certification agency server, and block D 240 interlocking with an external agency server, but is not limited thereto.

The blockchain-based certification audit data sharing and integrity verification system 1000 according to an embodiment of the present disclosure can not only prevent forgery by recording key records related to the smart contract in a distributed ledger 320, but also make an unilateral P2P change impossible by processing a P2P change procedure specially unfavorable to subscribers by agreement of the subscribers, and maximize reliability for the records by recording the change history in the block in which forgery is impossible.

The blockchain-based certification audit data sharing and integrity verification system 1000 according to an embodiment of the present disclosure is a blockchain-based certificate forgery detection system which can improve reliability for various authentications (KS, JIS, and quality assurance) issued by an certification agency (e.g., Korean Standards Association), and can simplify a authentication procedure being performed in duplication by several agencies for similar authentications and save time and cost by constructing a blockchain-based data sharing system.

Further, by managing an education system aimed at a quality officer in a customer corporate through a blockchain-based decentralized identifier (DID), it is possible to provide student's identity authentication and education completion confirmation without personal information exposure.

The blockchain-based certification audit data sharing and integrity verification system 1000 according to an embodiment of the present disclosure follows requirements for a blockchain technical verification (PoC) business range of Table 1.

**[Table 1]**

| **Requirement Classification** | **Explanation** | **Quantity** |
|---|---|---|
| Equipment Composition Requirement | Equipment history, such as HW, SW, and NW, necessary for target system configuration, essential requirement (functional requirement), and configuration requirement are described. | 3 |
| System Function Requirement | Functions (operations) which should be necessarily performed by a target system (business) or which a user should necessarily be able to perform are described. However, it is the principle that individual function requirement is prepared in a manner that a function structure for unit business is derived through hierarchical structure analysis of the entire system, and then a detailed requirement for a detailed function for this is prepared. | 19 |
| System Interface Requirement | Requirement for a system interface connecting a target system and an outside and a user interface are described, and in | 6 |
| | this description, linkage with other software, hardware, and communication interface, and a protocol used for information exchange with other systems is included. However, in case of the interface requirement, user-centered requirement, such as user convenience and user experience, is described. | |
| Security Requirement | For confidentiality and integrity of information asserts, data and functions of a target system, and requirement for controlling an operational access are described. | 8 |
| **Total** | | 36 |

The blockchain-based certification audit data sharing and integrity verification system 1000 according to an embodiment of the present disclosure follows requirements for a blockchain technical verification (PoC) business range of Table 2.

**[Table 2]**

| **Classification of Requirements** | **Requirement Number** | **Requirement Name** |
|---|---|---|
| Equipment Composition Requirement | **Subtotal** | **3** |
| | ECR-001 | Private blockchain node |
| | ECR-002 | Blockchain explorer web server |
| | ECR-003 | Blockchain explorer DB server |
| System Function Requirement | **Subtotal** | **19** |
| | SFR-001 | KSA existing user login support |
| | SFR-002 | KSA new user sign-up support |
| | SFR-003 | KSA user DID generation |
| | SFR-004 | Certificate/completion certificate VC issuance |
| | SFR-005 | Certificate/completion certificate VC expression function |
| | SFR-006 | Certificate/completion certificate VP generation function |
| | SFR-007 | Certificate/completion certificate VP submission |
| | SFR-008 | Verification function for submitted authentication/completion certificate VP |
| | SFR-009 | Certificate audit data storage |
| | SFR-010 | Certificate audit result storage |
| | SFR-011 | KSA existing user login (Mobile) |
| | SFR-012 | Certificate/completion certificate VC expression (Mobile) |
| | SFR-013 | Certificate/completion certificate VC submission (Mobile) |
| | SFR-014 | Certificate/completion certificate VC issuance (Mobile) |
| | SFR-015 | Certificate data and audit result storage (Web application) |
| | SFR-016 | VP verification requirement (Web application) |
| | SFR-017 | Blockchain input process |
| | SFR-018 | Data read |
| | SFR-019 | Capacity expansion function |
| System Interface Requirement | **Subtotal** | **6** |
| | SIR-001 | DID information registration requirement |
| | SIR-002 | Certificate audit data transmission requirement |
| | SIR-003 | Certificate audit result DB requirement |
| | SIR-004 | Certificate audit data sharing requirement |
| | SIR-005 | Management screen interface for manager (Web page) |
| | SIR-006 | User screen interface for user (Mobile) |
| Security Requirement | **Subtotal** | **8** |
| | SER-001 | Security-related regulatory compliance |
| | SER-002 | User authentication and control management |
| | SER-003 | Personal information protection |
| | SER-004 | Software development security application |
| | SER-005 | Data security |
| | SER-006 | Equipment security |
| | SER-007 | Information system access security |
| | SER-008 | External manpower security management |

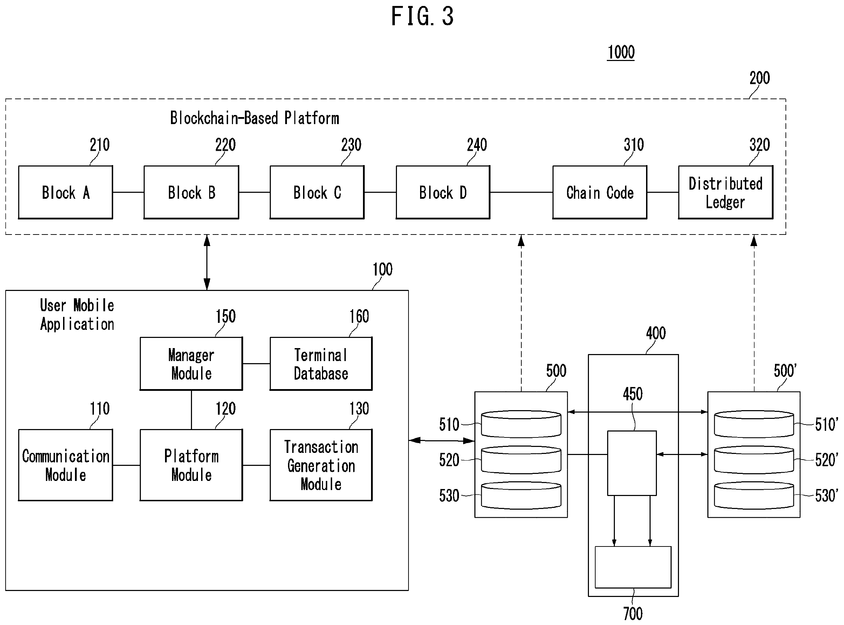

FIG. 3 is a configuration diagram of a blockchain-based certification audit data sharing and integrity verification system 1000 according to an embodiment of the present disclosure.

Referring to FIG. 3, a blockchain-based certification audit data sharing and integrity verification system 1000 according to an embodiment of the present disclosure includes a user equipment 10 mounted with a user authentication application 100, a decentralized identifier (DID) management blockchain 200, a blockchain-based certification audit data sharing and integrity verification device 400, a demand agency server 600, and an certification audit result integrity verification blockchain 700.

The user authentication application 100 of the user equipment 10 is a customer (corporate or individual) mobile application or app application, and registers a decentralized identifier (DID) in a decentralized identifier (DID) management blockchain 200, receives verifiable credential (VC) issuance from a first certification agency server 500, and registers the verifiable credential (VC).

The decentralized identifier (DID) management blockchain 200 registers the decentralized identifier (DID) from the user authentication application 100 of the user equipment 10 of the customer (corporate or individual), the first certification agency server 500, and the second certification agency server 500', and performs the verifiable presentation (VP) verification from the demand agency server 600.

A blockchain remote procedure call (RPC) module 450 receives user databases 510 and 510' for authenticity verification, certificate or completion certificate databases 520 and 520', and certification audit databases 530 and 530' and verifies authenticity in a manner that a computer far apart from the network executes a code, and transmits audit result hash and indexing to an certification audit result integrity verification blockchain 700.

The certification agency servers 500 and 500' include the user databases 510 and 510', the certificate or completion certificate databases 520 and 520', and the certification audit databases 530 and 530', and in case that a plurality of certification agency servers 500 and 500' perform authentication, the first certification agency server 500 and the second certification agency server 500' share the data, and provide the user databases 510 and 510' for the authenticity verification, the certificate or completion certificate databases 520 and 520', and the certification audit databases 530 and 530' to the blockchain remote procedure call (RPC) module 450.

The demand agency server 600 verifies the verifiable presentation (VP) in the decentralized identifier (DID) management blockchain 200 through reception of the verifiable presentation (VP) from the user authentication application 100 of the corporate or individual customer.

The certification audit result integrity verification blockchain 700 receives and stored indexing and audit result hash from the blockchain remote procedure call (RPC) module 450.

The blockchain-based certification audit data sharing and integrity verification system 1000 according to an embodiment of the present disclosure includes the user equipment 10 used by a subscriber, the blockchain-based platform 200 participating as the independent blocks of block A 210, block B 220, block C 230, and block D 240, executing the chain code for the authentication transaction related to the smart contract, and recording the authentication transaction in the block, and a communication network, and the user authentication application 100 is mounted on the user equipment 10 and is connected to the blockchain-based platform 200 through the communication network.

The user authentication application 100 of the blockchain-based certification audit data sharing and integrity verification device 1000 according to an embodiment of the present disclosure is an application recorded in a recording medium mounted on the user equipment 10 participating in the blockchain-based platform 200, and may include a P2P communication module 110 connected to the blockchain-based platform 200 through the communication network to transmit and receive data, a platform authentication module 120 requesting participation as one block of the blockchain-based platform 200, an authentication transaction generation module 130 issuing an authentication transaction related to the authentication in which the user has subscribed, submitting the issued authentication transaction to the blockchain-based platform 200, and requesting execution of the chain code 310, a manager module 150 managing a history of one or more authentication transactions including P2P information using the smart contract, and a terminal database 160 storing authentication information for the authentication transaction and P2P information. In particular, the P2P information may be synchronized with the distributed ledger 320 stored in the blockchain-based platform 200.

The P2P communication module 110 may be connected to the blockchain-based platform 200 through the communication network and may transit and receive the data. Further, the P2P communication module 110 may perform the user's identity authentication procedure by communicating with the blockchain-based certification audit data sharing and integrity verification device 400 through a separate network, and may be authorized to participate in the blockchain-based platform 200 as a block.

The platform authentication module 120 may be connected to the blockchain-based platform 200 as the block as the user authentication application 100 authorized to participate in the blockchain-based platform 200 submits a related certificate to the blockchain-based platform 200. In case that the certificate is normally submitted, and the certificate is identified by the blockchain-based platform 200, the blockchain-based platform 200 connects the block to the blockchain-based certification audit data sharing and integrity verification device 400, and makes the block participate in the network as one node.

In accordance with the user's input, the authentication transaction generation module 130 may generate the authentication transaction through reception of an input of the history of the smart contract, and may submit the generated authentication transaction to the blockchain-based platform 200. The authentication transaction submitted as above is recorded in the distributed ledger 320 after it is verified that the authentication transaction is a normal transaction as the blockchain-based platform 200 executes the chain code 310.

In the present disclosure, the role of adding the block to the blockchain-based platform 200 may be performed by block D 240, and the block D 240 may generate a latest block by aligning in order the permissioned authentication transaction received from the user authentication application 100, and may transmit the generated block to all blocks 210, 220, 230, and 240 belonging to the corresponding blockchain-based platform 200.

Further, all blocks 210, 220, 230, and 240 may verify the resultant value and the certificate of the block including the corresponding P2P change history, and if there is no problem in the verification process, the blocks may update the distributed ledgers 320 stored in their own local storages, and thereafter, the user authentication application 100 may perform P2P change by being reported the update result from the block A 210.

If a separate certificate issuance server is configured as a separate constitution for this, it may request the certificate from the blockchain-based platform 200 with respect to the user's transaction history previously recorded in the block in accordance with the user's input, and if a joint authentication server is configured, it can get a reply of the certificate certifying that block data recorded in the block of the blockchain-based platform 200 is equal to the original through comparison of the contents recorded in an on-chain and off-chain with respect to the user's transaction history in accordance with the request as above.

In accordance with the above-described structure, the blockchain-based certification audit data sharing and integrity verification device 400 according to an embodiment of the present disclosure may authenticate the user by performing the authentication, may participate in the blockchain-based platform 200, and may request and may be provided with a digital certificate certifying that its own document recorded in the block on the on-chain is equal to the original from the joint authentication server.

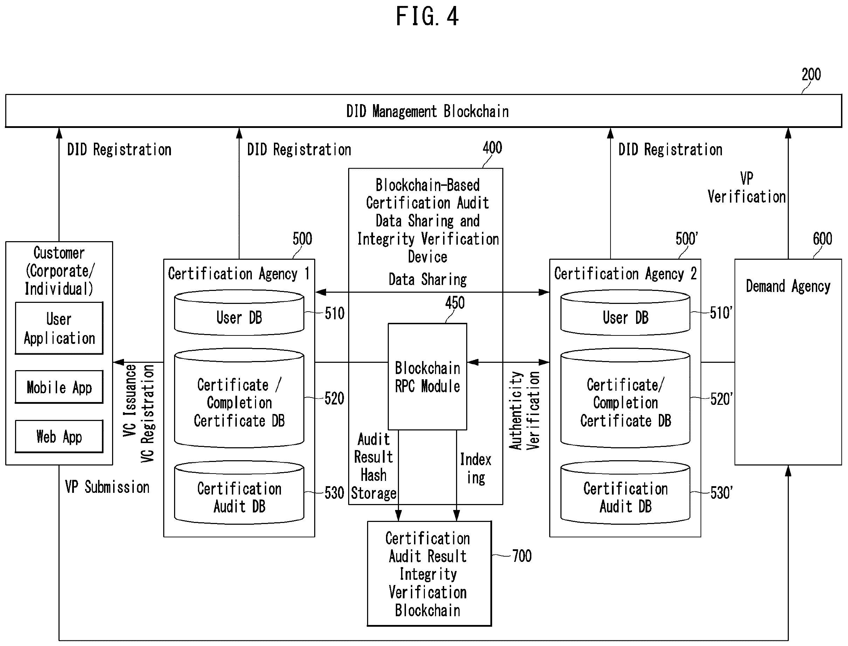

FIG. 4 is a configuration diagram of a blockchain-based certification audit data sharing and integrity verification device 400 according to an embodiment of the present disclosure.

Referring to FIG. 4, a blockchain-based certification audit data sharing and integrity verification device 400 according to an embodiment of the present disclosure is configured to include a blockchain remote procedure call (RPC) controller 450 and an integrity verification blockchain 700, and is composed of detailed modules.

In case that the blockchain remote procedure call (RPC) controller 450 controls the blockchain-based certification audit data sharing and integrity verification device 400 in a manner that a computer that is far apart from a network executes a code, verifies authenticity of an certificate or a completion certificate through reception of authentication data from user databases 510 and 510' for authenticity verification, certificate or completion certificate databases 520 and 520', and certification audit databases 530 and 530', and transmits audit result hash and indexing to the integrity verification blockchain 700, the certification audit result integrity verification blockchain 700 (e.g., AMO blockchain) receives and stores the indexing and audit result hash from the blockchain remote procedure call (RPC) controller 450.

The blockchain remote procedure call (RPC) controller 450 of the blockchain-based certification audit data sharing and integrity verification device 400 according to an embodiment of the present disclosure controls the following modules 1010 to 1330 to perform functions.

A user login support module 1010 is a login function after comparison of a user ID and PW input by an app application (android, iOS) with a user DB value in case that the app application clicks login after inputting the user ID and PW, and may access a member DB of an certification agency that stores user account information of an existing legacy system of the certification agency, such as Korean Standards Association (KSA), support the login of a new user subscribing through a web service (home page), and classify a corporate member and an individual member, and thus each user logs in through selection of the corporate or the individual.

A user sign-up support module 1020 proceeds with user (corporate member or individual member) sign-up in a web page of the certification agency, such as Korean Standards Association (KSA), and the user authentication application 100 manages and submits the certificate of the member. The sign-up of a new member is performed in a conventional manner, and during the sign-up, the corporate member and the individual member are classified, and even the user DB classifies and manages the members, and a password regular expression is applied as a regular expression that can satisfy the security requirement according to the security policy.

A user decentralized identifier (DID) generation module 1030 manages the certificate or the completion certificate of the certification agency, such as Korean Standards Association (KSA) based on the decentralized identifier (DID), issues each user's unique decentralized identifier (DID), and issues the decentralized identifier (DID) utilizing a software development kit (SDK) of a DID issuance agency or an application programming interface (API). If the user's decentralized identifier (DID) is issued, the decentralized identifier (DID) information is automatically registered in the blockchain.

An certificate or completion certificate verifiable credential (VC) issuance module 1040 issues and manages an certificate and completion certificate verifiable credential (VC) in a form issued by an certification agency, such as Korean Standards Association (KSA), based on a decentralized identifier (DID), generates claims, the verifiable credential (VC) of a corporate member issued by the certification agency, such as Korean Standards Association (KSA), generating the claims by authentication items, generates decentralized identifier (DID) information of the certification agency by signing with a private key of the certification agency of the issuance agency (KSA) in order to verify authenticity of the certificate and the completion certificate when issuing the verifiable credential (VC), and register the certificate or completion certificate verifiable credential (VC) issued for the decentralized identifier (DID) of an issuer (corporate or individual member).

An certificate or completion certificate verifiable credential (VC) expression function module 1050 expresses an certificate and completion certificate verifiable credential (VC) issued by an certification agency, such as Korean Standards Association (KSA), so that the verifiable credential (VC) can be inquired on a screen of an issuer (corporate or individual member), expresses user's decentralized identifier (DID) information and a verifiable credential (VC) list recorded in the decentralized identifier (DID) after a user login, inquires and expresses on the screen the user's decentralized identifier (DID) information registered in a decentralized identifier (DID) management blockchain (e.g., Luniverse blockchain), expresses an original certificate when a specific verifiable credential (VC) is clicked, and expresses an original certificate (pdf or PNG) photograph stored in an certificate or completion certificate DB.

A certificate or completion certificate verifiable presentation (VP) generation function module 1060 performs a verifiable presentation (VP) generation function for submitting certificate information that a user (corporate member) has been issued, and generates the verifiable presentation (VP) by collecting only the claims required by the demand agency. The verifiable presentation (VP) may be composed of the claims included in a single verifiable credential (VC), or may be generated by collecting claim information from several verifiable credentials (VCs), and it is possible to identify an issuance agency of the verifiable credential (VC) including the claims constituting the verifiable presentation (VP) and an owner (corporate member) of the verifiable presentation (VP) identifying authenticity of the certificate.

A certificate or completion certificate verifiable presentation (VP) submission module 1070 enables a user (corporate member) to submit a verifiable presentation (VP) about generated authentication test information to a demand agency, enables the demand agency to perform a process for identifying an owner (corporate member) of the verifiable presentation (VP), enables the owner (corporate member) of the verifiable presentation (VP) to sign with a private key and to submit the verifiable presentation (VP) when submitting the verifiable presentation (VP) to the demand agency, and enables the demand agency to identify the owner of the verifiable presentation (VP) through a public key of the corporate member.

A submitted certificate or completion certificate verifiable presentation (VP) verification function module 1080 enables a demand agency to trust a verifiable presentation (VP) submitted by a user (corporate member), identifies the verifiable presentation (VP) signed with a private key of the user (corporate member) by an identity verification through a public key of the user (corporate member), identifies an agency of a verifiable credential (VC) signed with a private key of an issuance agency (KSA) by an issuance agency verification through a public key of the issuance agency (KSA), and verifies authenticity of the certificate through comparison of a hash value of the certificate constituting the verifiable presentation (VP) submitted through the certificate authenticity verification with a hash value of the certificate registered in the decentralized identifier (DID) management blockchain (e.g., Luniverse blockchain).

An certification audit data storage module 1090 proceeds with a new certification audit procedure in the same manner as an existing process of an certification agency, such as Korean Standards Association (KSA), stores certification audit data submitted by a customer company, constructs a DB for storing the certification audit data, stores a data hash simultaneously with the data storage, and uses a hash value for data forgery verification when sharing the authentication data in order to be authenticated by another certification agency server.

A certification audit result storage module 1100 proceeds with a new certification audit procedure in the same manner as an existing process of an certification agency, such as Korean Standards Association (KSA), stores the result of certification audit submitted by a customer company, constructs a DB for storing the certification audit data and the result of the certification audit, stores an audit result hash in a blockchain (e.g., AMO blockchain) simultaneously with the audit result storage, and uses a hash value for audit result forgery verification when the certification result is submitted.

A user login (mobile) module 1110 classifies logged-in corporate member or individual member on the app application (Android, iOS), and when the user input a password (PW) for login on a check box, the input value should not be exposed.

A certificate or completion certificate verifiable credential (VC) expression (mobile) module 1120 requires functions and screen configuration for classifying and inquiring the certificate and the completion certificate, expresses user's decentralized identifier (DID) information, such as "XXXX Co., Ltd. Decentralized identifier (DID)", expresses the original certificate when a specific verifiable credential (VC) is clicked, and expresses a photograph of the original certificate (pdf or PNG) stored in the certificate or completion certificate DB.

A certificate or completion certificate verifiable credential (VC) submission (mobile) module 1130 expresses the original image of the certificate or completion certificate when a specific verifiable credential (VC) name is clicked on a decentralized identifier (DID) information and verifiable credential (VC) list inquiry screen, can submit the verifiable credential (VC) on the user authentication application 100 through configuration of a button "Submit" on an certificate image expression screen, inputs a submission method selection (e-mail, cellular phone transmission, or fax) and submission during a function of submitting the verifiable credential (VC), applies a regular expression to match a submission method in inputting the submission, and submits the final identification and verifiable credential (VC) through a transmission function.

A certificate or completion certificate verifiable credential (VC) issuance (web application) module 1140 stores the certification audit result when an issuance agency (e.g., Korean Standards Association) completes the certification audit, and performs certificate verifiable credential (VC) issuance. The certificate verifiable credential (VC) issuance requires input values, such as a customer ID, the original certificate (electronic document such as pdf or png), an authentication number, an issue date, and an expiry date (if applicable), and if the certificate verifiable credential (VC) is issued, the verifiable credential (VC) adds a newly issued verifiable credential (VC) to the user (corporate member) decentralized identifier (DID) by parsing the decentralized identifier (DID) information mapped on the customer ID.

An authentication data and audit result storage (web application) module 1150 stores information, such as a customer ID, an authentication kind (KS, ISO, green management, and the like), a test code (if applicable), a test report, and expiry date (if applicable). When storing the certification audit data and test result, the hash value is stored together, and the authenticity is identified.

A verifiable presentation (VP) verification requirement (web application) module 1160 determines the authenticity through forgery verification by a demand agency with respect to the verifiable presentation (VP) submitted by a customer (corporate member), and the demand agency performs verifiable presentation (VP) verification through a web page of an certification agency, such as Korean Standards Association (KSA), and identifies the authenticity through comparison of hash values recorded in the decentralized identifier (DID) management blockchain (e.g., Luniverse blockchain) in case of uploading an certificate electronic document submitted by the customer and the verifiable presentation (VP) for verification. Since the verifiable presentation (VP) upload section supports an upload of all verifiable credentials (VCs) constituting the contents of the verifiable presentation (VP), it is possible to upload a plurality of files or compressed files (zip, tar, and the like).

A blockchain input processing module 1170 identifies the configuration and disposition of a blockchain node, quantitatively measures an average performance (transaction per sec (TPS)) when a plurality of users simultaneously request the data registration, measures time when a final verification for a new block is completed in all nodes and a block finality is satisfied, and uses a most used function as a main transaction when the data registration and the authentication transaction occur. Preferably, the input processing speed should exceed 500 TPS.

A data reading module 1180 quantitatively measures an average performance (transaction per sec (TPS)), which should preferably exceed 500 TPS, when a plurality of users simultaneously request the data inquiry, and mainly inquires a most inquired function. A full-node-indexed application programming interface (API) server responds thereto.

A capacitance expansion function module 1190 quantitatively measures a block expansion performance, which should preferably exceed 1000 TPS, when reaching the maximum block capacity in accordance with the block generation conditions (generation period, the number of transactions per block, and the like).

A decentralized identifier (DID) information registration requirement module 1200 transmits the decentralized identifier (DID) information to the blockchain when the decentralized identifier (DID) is issued by the user authentication application 100, Korean Standards Association (KSA), or other certification agency servers 500 and 500', and in this case, a safe communication environment (dedicated network and virtual private network) should be provided. A protocol necessary for communication between servers connected to the user authentication application 110 or the certification agency server, such as Korean Standards Association (KSA), and the blockchain server is defined, and the communication is performed using the corresponding protocol.

A certification audit data transmission requirement module 1210 transmits data required for the certification audit to the audit result database DB when a web application or an app application server requests a new certification audit, and in this case, a safe communication environment (dedicated network and virtual private network) should be provided. A protocol necessary for communication between the web application or the app application and the audit result database DB is defined, and the communication is performed using the corresponding protocol.

An certification audit result database (DB) requirement module 1220 provides a safe communication environment (dedicated network or virtual private network) between the certification audit result database (DB) and the user authentication application, provides a safe communication environment (dedicated network or virtual private network) between the certification audit result database (DB) and the certification audit data sharing server, an certification agency, such as Korean Standards Association, being able to collect and analyze an event and a log related to the certification audit in the certification audit database (DB), transmits the certification audit data and the result collected from the certification audit result database (DB) to the data sharing server, and stores all data stored in the certification audit result database (DB) with hash values thereof. Future data forgery verification should be possible.

A certification audit data sharing requirement module 1230 provides a safe communication environment (dedicated network or virtual private network) between the certification audit result database (DB) and the certification audit data sharing server. A user has no authority to transfer the certification audit data to other certification agency server through the certification audit data sharing site, and if the user requests the certification audit data sharing, the certification audit data sharing server transmits the data and the audit result to another certification agency server through a request for data transmission from an issuance agency (e.g., Korean Standards Association), whereas if the data is transmitted through the certification audit data sharing site, an identity verification procedure is performed through a private key of the user (corporate member).

A management screen interface (web page) module 1240 for a manager provides a screen interface as in the following Table 3 for management and monitoring in a demonstration system.

**[Table 3]**

| Screen | Contents |
|---|---|
| Manager Login/logout | Manager login/logout |
| | Manager multi-authentication |
| Main screen | Certificate Issuance and revocation |
| (Dashboard) | situation by kinds |
| | System performance monitoring |
| Certificate issuance screen | Certificate request list/details by kinds |
| | Certificate request list/details by kinds |
| Configuration | Manager registration/modification/deletion |
| Log | Audit log (Full cycle, such as certificate issuance request, request verification, issuance, transmission, and application |
| Statistics | Certificate issuance/revocation/distribution statistics |
| | Statistic situation search support by items, periods, months, date, and agencies |

**A** use screen interface (mobile) module 1250 for a user provides a screen interface for user usage, and a subscription type is a corporate member or an individual member. During login, an account or a password is inputted, and a main screen configuration includes a corporate name, a product name, a certificate by product, a certificate expiry date, and an issuance agency.

A security-related regulation observance module 1260 establishes and implements physical, managerial, and technical security measures to prevent security incidents due to a poor security management when a contract partner performs a task, and the contract partner should comply with security requirements based on the security-related regulations, and should take responsibility when security incidents occur due to default on this. The contract partner should not leak data and information obtained while performing the task not only during the task performance but also after completion of the task, and in case that damage occurs in a specialized agency due to the default on this, the contract partner should take responsibility. Even in case that the contract partner makes a subcontract under the approval of the specialized agency, the security-related regulations at the level of the original business contract should be complied.

A user authentication and control management module 1270 provides a function of verifying the user's identity using an ID and a password, provides a function of managing (addition, modification, and deletion) a user's account, provides a password management function (password change, password masking, and password hash value storage), and provides a function of setting a safe password in consideration of a length, period, and complexity when configuring the password. The length of basically 9 or more digits is recommended, and the password change period is recommended to be within 6 months. When the password change period has passed, it may be preferable to make the user recognize danger through notifying the user of this and to guide the user to change the period, but the economics of the change is optional. The complexity is recommended so that the password has the configuration, in which three or more kinds of rules are mixed among upper/lower cases, numbers, and special letters, and in case of authentication failure, a message (e.g., wrong ID or wrong password) for related information should not be provided, and repeated authentication attempts through wrong authentication information are limited.

A personal information protection module 1280 enables the contract partner take managerial and technical protective measures necessary to protect personal information based on "Personal Information Protection Act" and "Standards for measures to ensure safety of personal information (Notice of Ministry of Public Administration and Security 2017-1, 2017.7. 26)", the contract partner is unable to process the personal information out of purpose of performing this task, and the contract partner is unable to transfer or re-entrust all or parts of rights and obligations on this business contract except for a case of obtaining prior approval from the supervisor. In case of assigning a re-entrusted trustee company, the contract partner should immediately notify the supervisor of the fact, and should not use the personal information over the purpose range of doing business or should not provide or leak the personal information to a third party not only in the contract period but also after completion of the contract. The contract partner should immediately destroy the personal information being possessed related to this business in case that the contract is terminated or the contract period expires, and in case of destroying the personal information, the contract partner should notify the supervisor of the result without delay.

The contract partner should manage personal information approach or access target, non-purpose use or providing, whether to comply with re-entrust prohibition, whether to implement safety measures, such as encryption, and other necessary matters to protect the personal information, and the supervisor may check the actual situation thereof and ask for correction. As for the actual personal information approach or access situation in the actual personal information processing situation, the supervisor may educate the contract partner so that the personal information is not lost, stolen, leaked, modified, or damaged, and separately from this, the contract partner should perform self-education, and in performing this business, if the contract partner violate his/her duty in relation to the personal information protection or the supervisor or personal information subject, or a third party takes a loss due to the reason attributable of the contract partner, the contract partner should compensate for damages.

A software development security enforcement module 1290 enables the contract partner comply with "Software development security guide (Ministry of Government Administration and Home Affairs, 2017.1)" determined by Minister of Public Administration and Security, and the contract partner should develop the software with no software security vulnerability by applying the software development security based on "Article 50 (Software development security rule) and Article 52 (Security weakness diagnostic criteria) of Administrative agency and public agency information system construction and operating instructions (noticed by Ministry of Government Administration and Home Affairs 2017-1, 2017.7.26.), take technical protection measures for data leak prevention from invasion, such as hacking, retain personal information handler access records and access authority change history, not directly hardcode the user authentication information, the resident registration number, and the password with a source code, utilize an inspection tool applied by the general manager when diagnosing the software development security, inspect the security vulnerability, such as the source code, and remove and measure the security vulnerability immediately upon discovery. The guide demand definition step of matters to be performed in accordance with the performing procedure performs secure coding standard preparation and developer education, the design and implementation step performs secure coding standard compliance and review, and the test step performs secure coding and security vulnerability diagnosis and measures.

A data security module 1300 enables the contract partner store and manages all data collected for the task performance and service outputs in a file server of a specialized agency or a PC designated by the person in charge of the task. Further, the contract partner should furnish a separate cabinet for storing material type data, such as books, manage the data cabinet with a lock device. If the data is provided from the demand agency (KSA), the contract partner should prepare a data management ledger, and manage the history, such as return and destruction. The contract partner should not arbitrarily use the investigated and analyzed data according to the task performance for other purposes rather than the task performance purpose, and measure the data not to be leaked to an outside. In case that the contract partner leaks leak prohibition target information, the contract partner is registered as a dishonest business operator to limit qualifications to participate in the bid according to the national contract laws, and should compensate for the damages. The contract partner should return all related data when the task is completed, delete the data from the equipment used during performing of the task, and submit a security commitment in the name of the representative. The leak prohibition target information includes information system access authority information, such as an external IP address situation of an information system, detailed information system configuration situation and information communication network configuration, user account, and password, information protection product and network equipment configuration information, such as information communication vulnerability analysis evaluation result, information business result and related program source code (corresponding to important business of which damages in security, national interest, and public interest are concerned in case of the leakage), national security system and information protection system introduction situation, intrusion blocking and prevention system (IPS), undisclosed target information according to Article 9 Paragraph 1 of Official Information Disclosure Act, personal information of Article 2 Paragraph 1 of Personal Information Protection Act, secret of Article 4 of security business rules, and confidential of Article 16 Paragraph 3 of the same enforcement rules.

An equipment security module 1310 enables the contract partner to install self-security programs, such as latest vaccine and malware removal software (SW), with respect to the equipment, such as notebook computer and PC used for the contract partner to perform business. The contract partner prohibits configuration of non-authorized wireless AP (wireless router and smart phone hotspot)in a work place, prohibits connection with a system development PC, and prohibits carry-in of a portable wireless modem (Wibro, Wi-Fi, and the like). The contract partner prepares an auxiliary storage media (including computer equipment) carry-in/out ledger when related equipment, such as notebook computers and portable storage media of the business-participating manpower, performs security measures, such as checking of malware infection and unauthorized release of data, and manages the notebook computers and portable storage media in a separate cabinet having a locking device. The contract partner configures CMOS, Windows, and a screen saver password in the carried-in PC and notebook, and the password is configured to have 9 or more digits in which special letters, alphabets, and numbers are mixed. The contract partner should perform security checking every month, and submit the result together during monthly reporting. In order to prevent data leakage when the business is terminated, the contract partner deletes the data from a disk of the equipment (PC and notebook computer) used to perform the business in the presence of the supervisor, and then submits a demagnetized process identifier, and withdraws the equipment.

In case of directly access the database DB for business reasons, an information system access security module 1320 uses the database according to the authority given after permission necessarily, and in case of accessing the information system such as a server and a database (DB), only a person who has got approval of a general manager can access the information system, and any non-authorized access should not be attempted. In case of using an account of information system equipment, such as server and DB, related account information should not be arbitrarily modified, or should not be informed of others. The contract partner performs a task by building a development environment separately from the operating system.

An external manpower security management module 1330 establishes and performs a security policy for the external manpower participating in the certification audit data platform development. The external manpower security policy identifies the external manpower logically or physically accessible to a legacy system of the certification agency, such as Korean Standards Association, establishes a policy capable of maintaining confidentiality and integrity of information assets, and establishes protection measures to cope with a case where an unauthorized person accesses the system. The external manpower should comply with the information security-related regulations including an external manpower security policy, submit a security pledge together for secret maintenance, and continuously monitor whether the external manpower complies with the security policy. If the manpower does not comply with the security policy, the external manpower security management module 1330 notifies the person in charge of this, performs an education for the information security side with respect to the external manpower dealing with the confidential information, and terminates the contract with the external manpower just after the termination of the contract with the external manpower.

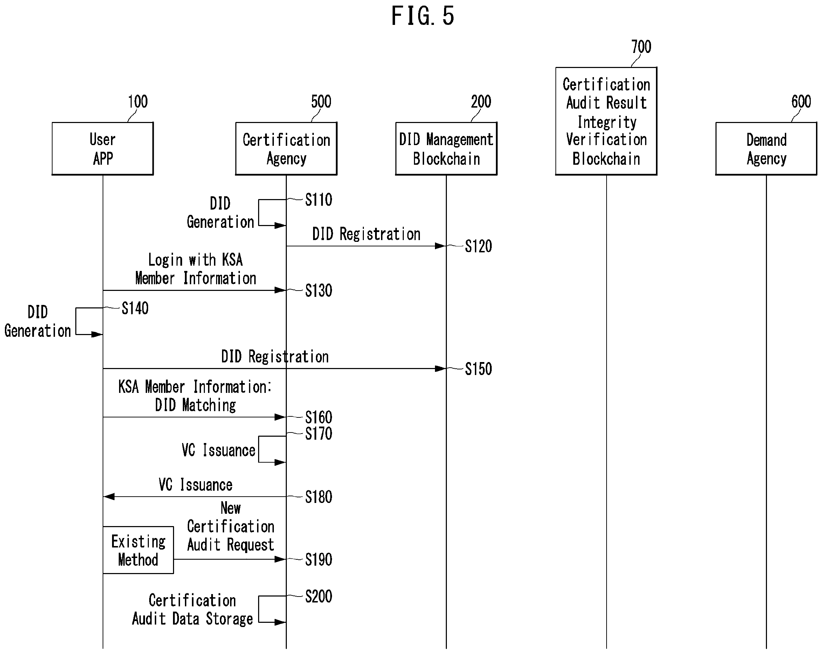

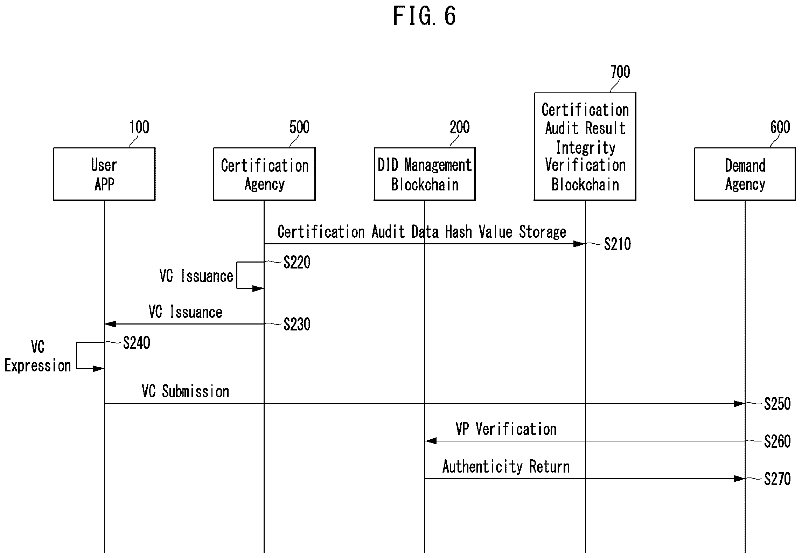

FIGS. 5 and 6 are workflows of a certificate (completion certificate) issuance and sharing in a blockchain-based certification audit data sharing and integrity verification device according to an embodiment of the present disclosure.

Referring to FIGS. 5 and 6, workflows for executing certificate or completion certificate issuance and sharing in the blockchain-based certification audit data sharing and integrity verification device according to an embodiment of the present disclosure are illustrated.

First, the certification agency servers 500 and 500' issue decentralized identifier (DID) by generating a pair of keys, and then register the decentralized identifier (DID) in the decentralized identifier (DID) management blockchain 200 (S110).

Further, the certification agency server 500 registers the decentralized identifier (DID) using a blockchain as a service (BaaS) type application programming interface (API) including the decentralized identifier (DID)-related function in the decentralized identifier (DID) management blockchain 200 (S120).

Thereafter, the user authentication application 100 classifies a corporate member and a private member by logging in with member information of the certification agency, such as Korean Standard Association (KSA) (S130).

Further, the user authentication application 100 generates an independent decentralized identifier (DID) of each member (S140).

Further, the user authentication application 100 registers the decentralized identifier (DID) in the decentralized identifier (DID) management blockchain 200 (S150).

Further, the user authentication application 100 registers the decentralized identifier (DID) information in the member information of the certification agency server 500 (S160).

Next, the user authentication application generates claims by authentication items in the certificate or completion certificate verifiable credential (VC), and signs with a private key (S170).

Thereafter, the user authentication application 100 can inquire the verifiable credential (VC) issued from the certification agency server 500 (S180).

Next, the certification agency servers 500 and 500' request a new certification audit (S190).

Further, the certification agency servers 500 and 500' store the certification audit data (S200).

Further, the certification agency servers 500 and 500' store a data hash and metadata in the certification audit result integrity verification block chain 700 (S210).

Further, the certification agency servers 500 and 500' generates claims by authentication items in the corporate member verifiable credential (VC), and signs with a private key (S220).

Further, the certification agency servers 500 and 500' issues the verifiable credential (VC) in the user authentication application 100 (S230).

Next, the user authentication application 100 expresses the verifiable credential (VC) (S240).

Further, the user authentication application 100 submits the verifiable presentation (VP) including an certificate file to the demand agency server 600 (S250).

Next, the demand agency server 600 verifies the verifiable presentation (VP) in the decentralized identifier (DID) management blockchain 200 (S260).

Then, the decentralized identifier (DID) management blockchain 200 returns authenticity to the demand agency server 600 (S270).

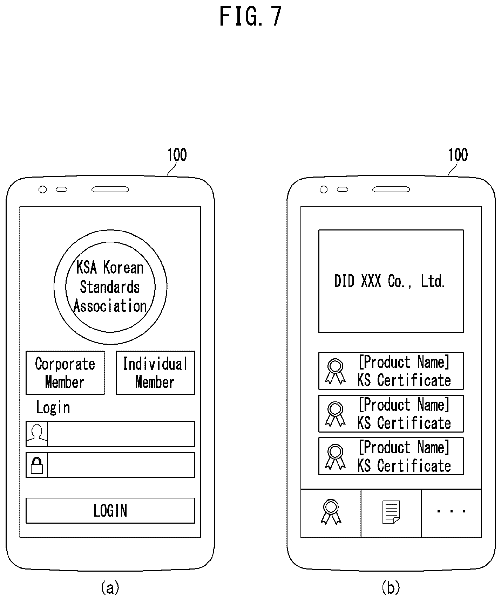

FIG. 7 is a configuration diagram of a user authentication application of a blockchain-based certification audit data sharing and integrity verification device according to an embodiment of the present disclosure.

Referring to (a) of FIG. 7, a login screen of the user authentication application 100 is exemplarily illustrated.

A member classification item 710 is an item for classifying the corporate member and the individual member.

A user authentication and control management item 720 recommends the length of basically 9 or more digits and the password change period of 6 months or less.

The user database access item 730 of the certification agency, such as Korean Standards Association, should access the user DB of the certification agency, and support the login depending on whether to coincide with the member information.

Referring to (b) of FIG. 7, a decentralized identifier (DID) expression screen of the user authentication application 100 is exemplified.

The decentralized identifier (DID) information expression item 810 exposes an upper end of the user's decentralized identifier (DID) information.

The verifiable credential (VC) list up item 820 is a screen listing up and showing the verifiable credential (VC) of the certificate (or completion certificate) owned by a user.

The certificate and completion certificate verifiable credential (VC) classification item 830 is a function capable of classifying and listing up the certificate and the completion certificate for user convenience.

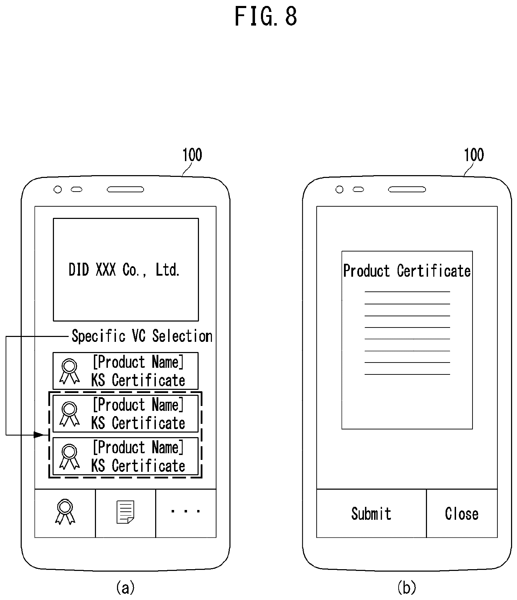

FIG. 8 is an exemplary diagram exemplifying verifiable credential (VC) screen expression of a user authentication application of a blockchain-based certification audit data sharing and integrity verification device according to an embodiment of the present disclosure.

Referring to (a) and (b) of FIG. 8, a verifiable credential (VC) information expression of the user authentication application 100 is exemplified.

The verifiable credential (VC) information expression item 910 enables a user to identify the original certificate (electronic document such as pdf or png) when a specific certificate for submitting the verifiable credential (VC) is clicked.

A private key signature item 920 enables the demand agency to identify the owner (corporate member) of the transferred certificate, and the corporate member submits the certificate by signing with the private key when submitting the certificate.

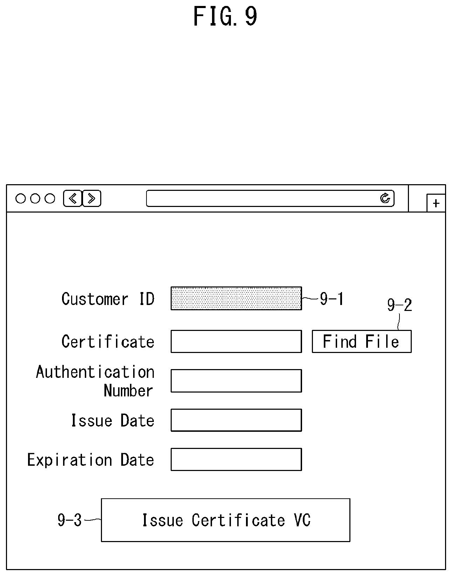

FIG. 9 is a diagram illustrating an example of a screen of a web application verifiable credential (VC) issuance (certificate) of an certification agency, such as Korean Standards Association, in a blockchain-based certification audit data sharing and integrity verification system 1000 according to an embodiment of the present disclosure.

Referring to FIG. 9, an example of a screen of a web application verifiable credential (VC) issuance (certificate) of a certification agency, such as Korean Standards Association, in a blockchain-based certification audit data sharing and integrity verification system 1000 according to an embodiment of the present disclosure is illustrated.

Item 9-1 is a customer ID, and is mapped and registered through the user decentralized identifier (DID) information.

Item 9-2 uploads the original file through "Find file" of the certificate when the certificate or completion certificate verifiable credential (VC) is issued in the user decentralized identifier (DID) information. The original file is in the form of the original certificate used by the certification agency, such as the existing Korean Standards Association, such as pdf or png.

Item 9-3 generates claims by authentication items when the verifiable credential (VC) is issued. The claim included in the verifiable credential (VC) includes an issuer decentralized identifier (DID), issuance target decentralized identifier (DID) (customer), certificate number, certificate time point, certificate expiry date (if applicable), certificate hash, and signature through the private key of the certification agency, such as Korean Standards Association when the verifiable credential (VC) is issued.

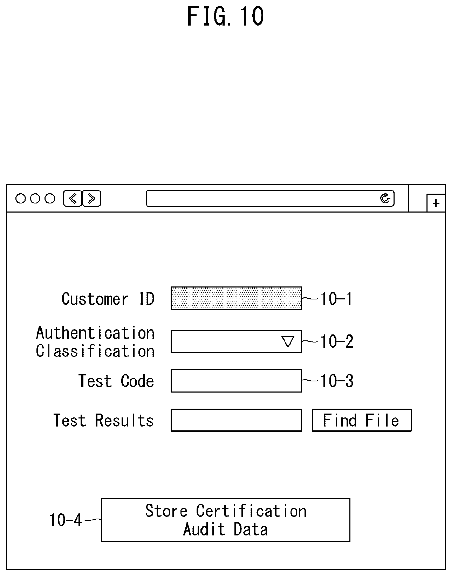

FIG. 10 is a diagram illustrating an example of a screen for storing a web application certification audit data of an certification agency, such as Korean Standards Association, in a blockchain-based certification audit data sharing and integrity verification system 1000 according to an embodiment of the present disclosure.

In item 10-1, a customer ID is mapped and registered through the user decentralized identifier (DID) information.

In item 10-2, the authentication is classified and selected through KS, ISO, green management, and the like. An input value is transferred through a combo box or a search function.

In item 10-3, the test code is a test code for each test being performed during the certification audit.

In item 10-4, the certification audit data, such as a database or a file server, is stored in the existing method of the certification agency, such as Korean Standards Association. A customer ID and a test result file are registered.

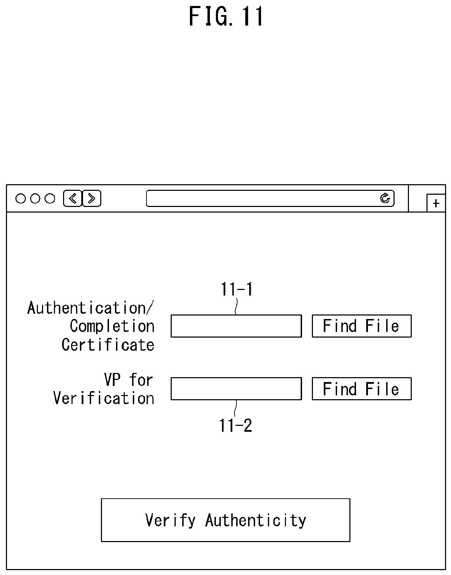

FIG. 11 is a conceptual diagram illustrating an example of verifiable presentation (VP) verification request screen in a blockchain-based certification audit data sharing and integrity verification device 1000 according to an embodiment of the present disclosure.

Referring to FIG. 11, an example of the verifiable presentation (VP) verification request screen of the web application of a certification agency, such as Korean Standards Association, according to an embodiment of the present disclosure.

In item 11-1, the verifiable presentation (VP) verification requirement uploads the certificate or the completion certificate for comparing a hash value of the submitted certificate or the completion certificate with a hash value registered in the decentralized identifier (DID) management blockchain (e.g., Luniverse blockchain). The pdf and png is in the form of the original certificate used in the certification agency such as Korean Standards Association.

In item 11-2, the verifiable presentation (VP) for verification for comparing the hash value of the submitted verifiable presentation (VP) with the hash value registered in the decentralized identifier (DID) management blockchain (e.g., Luniverse blockchain) is uploaded. The verifiable presentation (VP) verification is performed through the verification of all verifiable credential (VC) constituting the verifiable presentation (VP). The selection of the plurality of verifiable credential (VC) or the upload of the compressed files (zip, tar, and the like) should be possible.

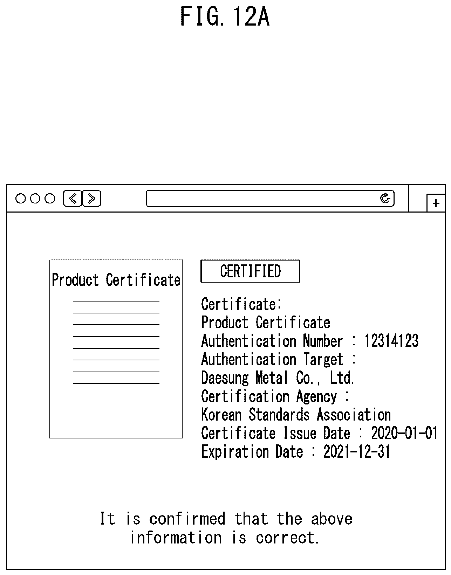

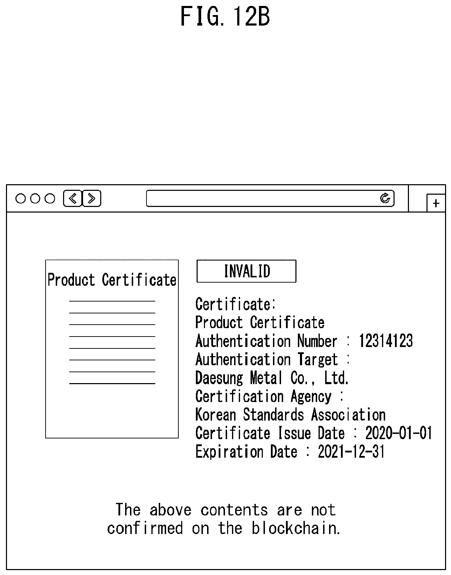

FIGS. 12A and 12B are exemplary diagrams an original web application verifiable presentation (VP) verification screen (FIG. 12A) and a forged web application verifiable presentation (VP) verification screen of an certification agency, such as Korean Standards Association, in a blockchain-based certification audit data sharing and integrity verification method according to an embodiment of the present disclosure.

Referring to FIG. 12A, a screen for identifying the original as the result of the web application verifiable presentation (VP) verification of an certification agency, such as Korean Standards Association, in the blockchain-based certification audit data sharing and integrity verification method according to an embodiment of the present disclosure is illustrated.

Referring to FIG. 12B, a screen for identifying the forgery as the result of the web application verifiable presentation (VP) verification of an certification agency, such as Korean Standards Association, in the blockchain-based certification audit data sharing and integrity verification method according to an embodiment of the present disclosure is illustrated.

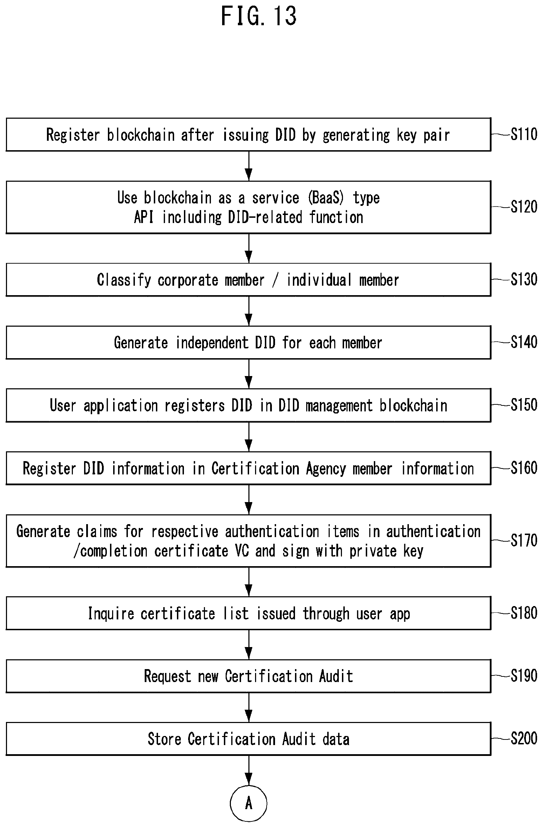

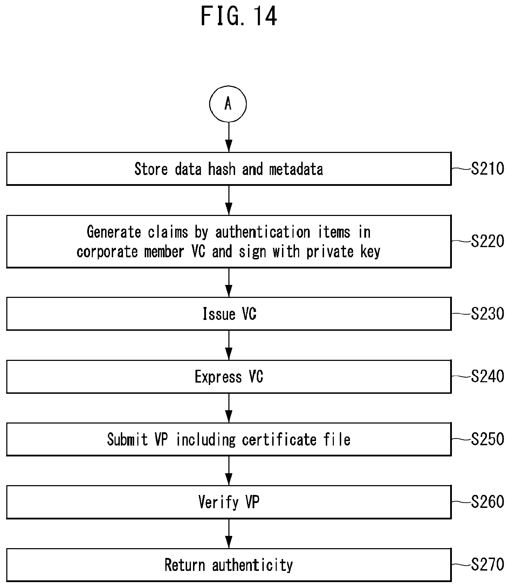

FIGS. 13 and 14 are flowcharts of a blockchain-based certification audit data sharing and integrity verification method according to an embodiment of the present disclosure.

Referring to FIGS. 13 and 14, a blockchain-based certification audit data sharing and integrity verification method according to an embodiment of the disclosure, the method may include: registering a blockchain after issuance of a decentralized identifier (DID) by generating a pair of keys (S110); using a blockchain as a service (BaaS) type application programming interface (API) including a decentralized identifier (DID)-related function (S120); classifying a corporate member or a private member (S130); generating independent decentralized identifier (DID) of each member (S140); registering, by the user authentication application, the decentralized identifier (DID) in a decentralized identifier (DID) management blockchain (S150); registering decentralized identifier (DID) information in certification agency member information (S160); generating claims by authentication items in a certificate or completion certificate verifiable credential (VC) and signing with a private key (S170); inquiring an certificate list issued through the user authentication application (S180); requesting a new certification audit (S190); storing certification audit data (S200); storing a data hash and metadata (S210); generating claims by authentication items in a corporate member verifiable credential (VC) and signing with a private key (S220); issuing the verifiable credential (VC) (S230); expressing the verifiable credential (VC) (S240); submitting a verifiable presentation (VP) including an certificate file (S250); verifying the verifiable presentation (VP) (S260); and returning authenticity (S270).

The blockchain-based certification audit data sharing and integrity verification method according to an embodiment of the disclosure may further include: generating the verifiable credential (VC) including results for test items in a test report or the certificate; eliminating repetition of a test by accommodating a VC of existing test items in another test or evaluation with respect to the test items included in the existing test; and generating a new VC including the existing test items and new test items together in a new test report or an certificate.

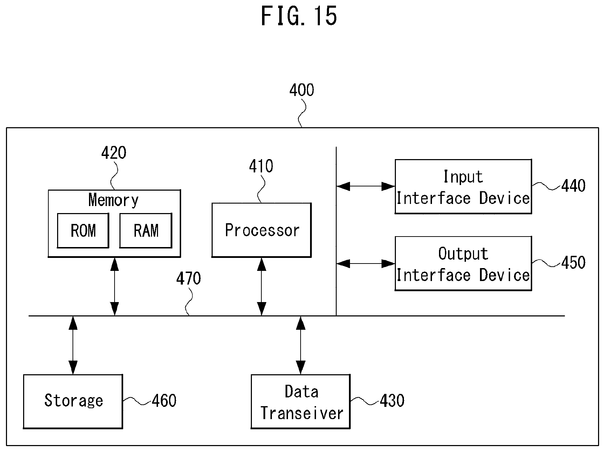

FIG. 15 is a configuration diagram of a blockchain-based certification audit data sharing and integrity verification device 400 according to an embodiment of the present disclosure.

Referring to FIG. 15, a blockchain-based certification audit data sharing and integrity verification device 400 according to an embodiment of the present disclosure may be configured to include a processor 410, a memory 420, a transceiver 430, an input interface device 440, an output interface device 450, a storage device 460, and a bus 470.

The blockchain-based certification audit data sharing and integrity verification device 400 according to an embodiment of the present disclosure includes a processor 410, and a memory 420 in which at least one command being executed through the processor 410, wherein the at least one command causes the processor 410 to perform: registering a blockchain after issuance of a decentralized identifier (DID) by generating a pair of keys (S110); using a blockchain as a service (BaaS) type application programming interface (API) including a decentralized identifier (DID)-related function (S120); classifying a corporate member or a private member (S130); generating independent decentralized identifier (DID) of each member (S140); registering, by the user authentication application, the decentralized identifier (DID) in a decentralized identifier (DID) management blockchain (S150); registering decentralized identifier (DID) information in certification agency member information (S160); generating claims by authentication items in a certificate or completion certificate verifiable credential (VC) and signing with a private key (S170); inquiring an certificate list issued through the user authentication application (S180); requesting a new certification audit (S190); storing certification audit data (S200); storing a data hash and metadata (S210); generating claims by authentication items in a corporate member verifiable credential (VC) and signing with a private key (S220); issuing the verifiable credential (VC) (S230); expressing the verifiable credential (VC) (S240); submitting a verifiable presentation (VP) including an certificate file (S250); verifying the verifiable presentation (VP) (S260); and returning authenticity (S270).

The processor 410 may mean a central processing unit (CPU), a graphics processing unit (GPU), or a dedicated processor performing methods according to embodiments of the present disclosure.

The memory 420 and the storage device 460 may be configured by at least one of a volatile storage medium and a nonvolatile storage medium. For example, the memory 420 may be configured by at least one of a read only memory (ROM) and a random access memory (RAM).

Further, the blockchain-based certification audit data sharing and integrity verification device 400 may include the transceiver 430 performing communication through a wireless network.

Further, the blockchain-based certification audit data sharing and integrity verification device 400 may further include the input interface device 440, the output interface device 450, and the storage device 460.

Further, respective constituent elements included in the blockchain-based certification audit data sharing and integrity verification device 400 may be connected by the bus 470, and perform communication with each other.

The blockchain-based certification audit data sharing and integrity verification device 400 may be, for example, a communicable desktop computer, a laptop computer, a notebook computer, a smart phone, a tablet PC, a mobile phone, a smart watch, a smart glass, an e-book reader, a portable multimedia player (PMP), a portable game machine, a navigation device, a digital camera, a digital multimedia broadcasting (DMB) player, a digital audio recorder, a digital audio player, a digital video recorder, a digital video player, a personal digital assistant (PDA), or the like.

The blockchain-based certification audit data sharing and integrity verification system 1000 according to an embodiment of the present disclosure can provide the following economical expected effect, industrial expected effect, and social expected effect.
First, as the economical expected effect, since the electronic document is used during the test authentication and notarization, the issuance fee can be reduced, and the resource saving becomes possible. In case of providing the my certification audit data through the blockchain application programming interface (API), a profit business, such as the application programming interface (API) rental fee, becomes possible, and the corporate competitiveness can be strengthened by relieving the burden of the corporate through reduction of the authentication acquisition time and test costs.
Second, as the industrial expected effect, reliability and convenience of the domestic certification audit system and services can be improved, and by selling and sharing the product test data being performed during the authentication acquisition, the data can be used for the quality research and product improvement, and through the reliability enhancement for the certification audit result, sales of domestic products can be increased in the international market.
Third, as the social expected effect, since source blocking of the certificate forgery and data manipulation can be achieved, the mutual reliability cost can be saved, and through facilitation of the identification and access of the education training completion certificate, employment problems can be solved through the education training.

The operation of the method according to an embodiment of the present disclosure can be implemented by a computer-readable program or code in a recording medium. The computer-readable recording medium includes all kinds of recording devices in which data that is readable by a computer system is stored. Further, in the computer-readable recording medium, a computer-readable program or code, which can be distributed to a computer system connected through a network in a distribution method, can be stored and executed.

Further, the computer-readable recording medium may include a hardware device specially configured to store and perform program instructions, such as ROM, RAM, and flash memory. The program instructions may include not only machine language code made by a compiler but also a high-level language code that can be executed by a computer using an interpreter.

Although some aspects of the present disclosure have been described in the context of the apparatus, the aspects may indicate the corresponding descriptions according to the method, and the blocks or devices may correspond to the steps of the method or the features of the steps. Similarly, the aspects described in the context of the method may be expressed as the features of the corresponding blocks or items or the corresponding devices. Some or all of the steps of the method may be executed by (or using) a hardware device such as a microprocessor, a programmable computer or an electronic circuit. In some embodiments, one or more of the most important steps of the method may be executed by such a device.

In the embodiments, a programmable logic device (e.g., field programmable gate array) may be used to perform some or all of the functions of the methods explained herein. In the embodiments, the field programmable gate array may operate together with a microprocessor for performing one of the methods explained herein. In general, it is preferable that the methods are performed by a certain hardware device.

Although the present disclosure has been described with reference to preferred embodiments, it will be apparent to those skilled in the art that the present disclosure may be variously changed and modified without departing from the scope of the invention defined in the following claims.

## Claims

1. A blockchain-based certification audit data sharing and integrity verification system comprising:
at least one user equipment configured to participate in a blockchain-based platform and mounted with a user authentication application;
at least one certification agency server configured to participate in the blockchain-based platform and to provide authentication data composed of user data for authenticity verification, certificate or completion certificate data, and certification audit data;
at least one blockchain-based platform server configured to record an authentication transaction in a block; and
a blockchain-based certification audit data sharing and integrity verification device configured to: generate audit result data by auditing forgery verification of a document requested by the user authentication application of the user equipment using the authentication data of the at least one certification agency server in interlock with the blockchain-based platform server, and share the generated audit result data with the at least one certification agency server.

2. The system of claim 1, wherein the at least one certification agency server comprises:
a user database in which user data is stored;
a certificate or completion certificate database in which certificate or completion certificate data is stored; and
a certification audit database in which certification audit data is stored,
wherein in case that a plurality of certification agency servers perform authentication, a first certification agency server and a second certification agency server share data with each other, and provide, to a blockchain remote procedure call (RPC) module, the user data for the authenticity verification, the certificate or completion certificate data, and the certification audit data.

3. The system of claim 1, further comprising a demand agency server configured to receive a submission of a verifiable presentation (VP) from the user authentication application of the user equipment of a corporate or individual customer and to verify the verifiable presentation (VP) in a decentralized identifier (DID) management blockchain.

4. A blockchain-based certification audit data sharing and integrity verification device comprising:
a blockchain remote procedure call (RPC) controller configured to: control the blockchain-based certification audit data sharing and integrity verification device in such a manner that a computer far apart from a network executes a code, verify authenticity of an certificate or a completion certificate through reception of authentication data for authenticity verification, and transmit an audit result hash and an indexing to an integrity verification blockchain; and
the certification audit result integrity verification blockchain configured to receive and store the indexing and the audit result hash from the blockchain remote procedure call (RPC) controller.

5. The device of claim 4, further comprising a user decentralized identifier (DID) generating module configured to: manage an certificate and a completion certificate of a first certification agency server based on a decentralized identifier (DID), issue each user's unique decentralized identifier (DID), utilizing a software development kit (SDK) or an application programming interface (API), and automatically register decentralized identifier (DID) information in a blockchain in case that the user's decentralized identifier (DID) is issued.

6. The device of claim 4, further comprising an certificate or completion certificate verifiable credential (VC) issuance module configured to: issue and manage an certificate and completion certificate verifiable credential (VC) in a form issued by a first certification agency server based on a decentralized identifier (DID), generate claims, the verifiable credential (VC) of a corporate member issued by the first certification agency server generating the claim by authentication items, generate decentralized identifier (DID) information of a first certification agency by signing with a private key of the first certification agency in order to verify authenticity of the certificate and the completion certificate when issuing the verifiable credential (VC), and register the certificate or completion certificate verifiable credential (VC) issued for the decentralized identifier (DID) of an issuer (corporate or individual member).

7. The device of claim 4, further comprising an certificate or completion certificate verifiable credential (VC) expression function module configured to: express an certificate and completion certificate verifiable credential (VC) issued by a first certification agency so that the verifiable credential (VC) can be inquired on a screen of an issuer (corporate or individual member), express user's decentralized identifier (DID) information and a verifiable credential (VC) list recorded in the decentralized identifier (DID) after a user login, inquire and express on the screen the user's decentralized identifier (DID) information registered in a first blockchain server, express an original certificate when a specific verifiable credential (VC) is clicked, and express an original certificate image stored in an certificate or completion certificate DB.

8. The device of claim 4, further comprising a certificate or completion certificate verifiable presentation (VP) generation function module configured to:
perform a verifiable presentation (VP) generation function, configure claims included in a single verifiable credential (VC) by collecting only the claims demanded by a demand agency, or generate the verifiable presentation (VP) by collecting claim information from a plurality of verifiable credentials (VCs), and
make it possible to identify an issuance agency of the verifiable credential (VC) including the claims constituting the verifiable presentation (VP) and an owner (corporate member) of the verifiable presentation (VP) identifying authenticity of the certificate.

9. The device of claim 4, further comprising an certificate or completion certificate verifiable presentation (VP) submission module configured to: enable a user (corporate member) to submit a verifiable presentation (VP) about generated authentication test information to a demand agency, enable the demand agency to perform a process for identifying an owner (corporate member) of the verifiable presentation (VP), enable the owner (corporate member) of the verifiable presentation (VP) to sign with a private key and to submit the verifiable presentation (VP) when submitting the verifiable presentation (VP) to the demand agency, and enable the demand agency to identify the owner of the verifiable presentation (VP) through a public key of the corporate member.

10. The device of claim 4, further comprising a submitted certificate or completion certificate verifiable presentation (VP) verification function module configured to: enable a demand agency to trust a verifiable presentation (VP) submitted by a user (corporate member), identify the verifiable presentation (VP) signed with a private key of the user (corporate member) by an identity verification through a public key of the user (corporate member), identify an agency of a verifiable credential (VC) signed with a private key of a first certification agency by an issuance agency verification through a public key of a first certification agency, and verify authenticity of the certificate through comparison of a hash value of the certificate constituting the verifiable presentation (VP) submitted through the certificate authenticity verification with a hash value of the certificate registered in a first blockchain.

11. The device of claim 4, further comprising a certification audit data storage module configured to: proceed with a new certification audit procedure as a process of a first certification agency, store certification audit data submitted by a customer company, construct a database (DB) for storing the certification audit data, store a data hash simultaneously with the data storage, and use a hash value for data forgery verification when sharing the authentication data in order to be authenticated by another certification agency server.

12. The device of claim 4, further comprising an certification audit result storage module configured to: proceed with a new certification audit procedure as a process of a first certification agency, store the result of certification audit submitted by a customer company, construct a database for storing the certification audit data and the result of the certification audit, store an audit result hash in a second blockchain simultaneously with the storing of the audit result, and use a hash value for certification result forgery verification when the certification result is submitted.

13. The device of claim 4, further comprising a blockchain input processing module configured to: identify a configuration and disposition of a blockchain node, measure an average performance (transaction per sec (TPS)) when data registration is requested, measure time when a final verification for a new block is completed in all nodes and a block finality is satisfied, and use a most used function as a main transaction when the data registration and an authentication transaction occur.

14. The device of claim 4, further comprising a data reading module configured to: measure an average performance (transaction per sec (TPS) when data inquiry is requested, and mainly inquire a most inquired function, a full-node-indexed application programming interface (API) server responding thereto.

15. The device of claim 4, further comprising a decentralized identifier (DID) information registration requirement module configured to: transmit decentralized identifier (DID) information to a blockchain when a user authentication application, a first certification agency server, or a second certification agency server issues a decentralized identifier (DID), provide a dedicated network or a virtual private network, define a protocol necessary for communication between a server connected to the user authentication application or the first certification agency server and a first blockchain server, and perform communication using the defined protocol.

16. The device of claim 4, further comprising an certification audit data transmission requirement module configured to: transmit authentication data necessary for a certification audit to an audit result database (DB) when a user authentication application server requests a new certification audit, provide a dedicated network or a virtual private network, define a protocol necessary for communication between the user authentication application server and the audit result database (DB), and perform communication using the defined protocol.

17. The device of claim 4, further comprising a future data forgery verifiable certification audit result database (DB) requirement module configured to: provide a dedicated network or a virtual private network between a certification audit result database (DB) and a user authentication application, provide a dedicated network or a virtual private network between the certification audit result database (DB) and an certification audit data sharing server, a first certification agency being able to collect and analyze an event and a log related to the certification audit in a certification audit database (DB), transmit the certification audit data and the result collected from the certification audit result database (DB) to a data sharing server, and store all data stored in the certification audit result database (DB) with hash values thereof.

18. The device of claim 4, further comprising a certification audit data sharing requirement module configured to: provide a dedicated network or a virtual private network between an certification audit result database (DB) and a certification audit data sharing server, transmit data and the audit result to a second certification agency server through a data transmission request by the certification audit data sharing server to a first certification agency server in case that a user who is unauthorized to transfer the certification audit data to another certification agency server through a certification audit data sharing site, and perform an identity verification procedure through a private key of a user (corporate member) in case that the data is transmitted through the certification audit data sharing site.

19. A blockchain-based certification audit data sharing and integrity verification method using a system in which a user equipment mounted with a user authentication application, a blockchain-based certification audit data sharing and integrity verification device, and a blockchain-based platform interlock with one another, the method comprising:
registering a blockchain after issuance of a decentralized identifier (DID) by generating a pair of keys;
using a blockchain as a service (BaaS) type application programming interface (API) including a decentralized identifier (DID)-related function;
classifying a corporate member or a private member;
generating independent decentralized identifier (DID) of each member;
registering, by the user authentication application, the decentralized identifier (DID) in a decentralized identifier (DID) management blockchain;
registering decentralized identifier (DID) information in certification agency member information;
generating claims by authentication items in an certificate or completion certificate verifiable credential (VC) and signing with a private key;
inquiring an certificate list issued through the user authentication application;
requesting a new certification audit;
storing certification audit data;
storing a data hash and metadata;
generating claims by authentication items in a corporate member verifiable credential (VC) and signing with a private key;
issuing the verifiable credential (VC);
expressing the verifiable credential (VC);
submitting a verifiable presentation (VP) including an certificate file;
verifying the verifiable presentation (VP); and
returning authenticity.

20. The method of claim 19, further comprising:
generating the verifiable credential (VC) including results for test items in a test report or the certificate;
eliminating repetition of a test by accommodating a VC of existing test items in another test or evaluation with respect to the test items included in the existing test; and
generating a new VC including the existing test items and new test items together in a new test report or an certificate.
